# EUROPEAN PATENT APPLICATION

(11) **EP 3 660 324 A1**
(43) Date of publication of application: **03.06.2020**
(21) Application number: 18838382.2
(22) Date of filing: 20.07.2018
(51) Int. Cl.: F04D 29/10, F04D 25/04, F04D 29/12, F16J 15/34

(54) **PUMP AND SEALING SYSTEM**

(30) Priority: 26.07.2017 JP 2017144308; 26.07.2017 JP 2017144409; 26.07.2017 JP 2017144410
(71) Applicant: Ebara Corporation, Ohta-ku, Tokyo 144-8510 (JP)
(72) Inventor: YOSHIKAWA, Shigeru, Tokyo 144-8510 (JP); HAYAKAWA, Junichi, Tokyo 144-8510 (JP)
(74) Representative: Carstens, Dirk Wilhelm
(86) International application number: PCT/JP2018/027267
(87) International publication number: WO 2019/021958

(57) **Abstract**

The pump includes a rotational shaft (1), an impeller (3) fixed to the rotational shaft (1), a casing (2) that houses the impeller (3), a double mechanical seal (20), a seal chamber (25) that houses the double mechanical seal (20), an oil reservoir (30) configured to store oil, an oil supply line (26) providing fluid communication between the oil reservoir (30) and the seal chamber (25), a first oil pump (31) configured to pressurize oil supplied from the oil reservoir (30) and deliver the oil to the seal chamber (25), a second oil pump (42) arranged in parallel with the first oil pump (31), an oil outlet line (27) coupled to the seal chamber (25), and a pressure retaining mechanism for retaining pressure of oil in the seal chamber (25).

## Description

### Technical Field

The present invention relates to a pump including a mechanical seal, and more particularly to a pump including a sealing system for preventing leakage of a fluid containing a harmful component, such as volatile flammable component or hydrogen sulfide.

### Background Art

When fossil fuels, such as oil and natural gas, are refined, it is necessary to remove impurities, such as carbon dioxide (CO₂) and sulfur (S). Sulfur is often recovered as hydrogen sulfide (H₂S) in a refining process. A fluid, handled by a pump used in the refining process, may contain a lot of hydrogen sulfide. Hydrogen sulfide is extremely toxic. If the hydrogen sulfide leaks into the atmosphere, it will cause serious damage to a human body. Therefore, it is necessary to pay full attention to design a pump that handles hydrogen sulfide so that the hydrogen sulfide never leaks to the outside of the pump.

A mechanical seal is an important element that seals a location where a rotational shaft of the pump passes through a casing of the pump. The mechanical seal is a device that prevents a fluid from leaking outside the pump by a sliding contact of a rotary ring attached to the rotational shaft and a stationary ring attached to the casing. The rotary ring and the stationary ring are pressed against each other with an appropriate surface pressure. If the rotary ring and stationary ring are in sliding contact in a dry state, their sliding surfaces will be damaged in a short period of time due to heat generation, and the sealing function cannot be maintained. Therefore, an appropriate amount of liquid should be supplied to the sliding surfaces for cooling and lubrication purposes. This is called flushing, and a liquid to be supplied to the sliding surfaces is called flushing liquid. A combination of pipes and equipment/instrument that supply the flushing liquid to the mechanical seal is called a sealing system or sealing plan. There are various sealing systems depending on structures of pumps and types of fluid handled. In a case where a liquid handled by the pump is not harmful (e.g., the liquid is neither toxic nor ignitable), the liquid itself, i.e., the liquid handled by the pump, can be supplied as the flushing liquid. This is called self-flushing.

Patent Document 1 discloses a structure in which a toxic or flammable liquid, pressurized by a pump, is delivered into a compartment provided between an inner seal and an outer seal through a gap between a rotational shaft and a stationary member. The liquid is mixed with a fluid (e.g., air or steam) which is separately supplied into the compartment, and the mixture is transferred from a seal chamber to a regeneration system outside the pump.

The pressure of the fluid (e.g., air or steam) supplied to the compartment is lower than the pressure in the pump and higher than the external air, in order to allow the toxic or flammable liquid, pressurized by the pump, to flow into the compartment. Therefore, the toxic or flammable liquid in the compartment may flow out through the outer seal.

Patent Document 2 discloses a sealing structure in which a sealing oil is supplied to a space provided between an inner oil film seal and an outer oil film seal to form an oil film in a gap between a stationary side, a rotating side, and a sealing ring, which is not incorporated into both the stationary side and the rotating side. The oil pushed out from the oil film seal comes into contact with a fluid pressurized by a compressor or pump, and is then recovered and reused. Specifically, if the fluid pressurized by the compressor or pump contains a toxic or flammable fluid, the oil is used in a contaminated state caused by the toxic or flammable fluid. Since this oil also flows to the outer oil film seal, there is a risk that the oil contaminated by the toxic or flammable fluid becomes a medium that carries the toxic or flammable fluid into the external air.

Patent Document 3 discloses a technique in which a liquid handled by a pump is pressurized and supplied to a seal mechanism and is used as a leakage prevention liquid for the seal mechanism. The pressure applied to the seal mechanism when the pump is stopped is a pressure corresponding to a discharge pressure of the pump. This pressure is also applied to sliding surfaces of a sliding ring at an exterior side and an opposing ring of the sealing mechanism. If the liquid handled by the pump contains a toxic or flammable fluid, such dangerous liquid exists close to the external air, and may leak into the outside.

When a liquid handled by a pump contains a harmful component, the self flushing cannot be used, because the harmful liquid may leak to the outside through a gap between sliding surfaces. Therefore, in order to prevent the harmful liquid from leaking outside through the sliding surfaces of the mechanical seal, a double mechanical seal is used. The double mechanical seal includes a mechanical seal provided at a pump-inner side and a mechanical seal provided at an atmospheric side. These two mechanical seals are arranged back to back. In this double mechanical seal, it is necessary to supply a harmless flushing liquid between the mechanical seal at the pump-inner side and the mechanical seal at the atmospheric side at a pressure higher than the internal pressure of the pump, i.e., higher than the pressure of the liquid handled by the pump. In order to do so, it is necessary to pressurize the flushing liquid by a certain pressurizing means. Examples of the pressurizing means that have been put into practical use include those using a flushing-liquid pressurizing pump, a method using an accumulator, and the like. These flushing plans are standardized in API682.

Patent Document 4 discloses a sealing technique for preventing leakage of toxic or flammable fluid pressurized by a pump to the outside of the pump. In this sealing technique, when a main pump stops due to a power failure or other cause, pressure of a flushing liquid, which is different from the fluid handled by the pump, is kept higher than that of the fluid in the pump to prevent fluid leakage. Specifically, a high-pressure oil, as the flushing liquid, is supplied into a seal chamber by an oil pump. Furthermore, in order to continue the sealing function in the event of an emergency, such as a power failure, the oil pressure in the seal chamber is maintained by closing an emergency shut-off valve attached to a line for discharging the high-pressure oil from the seal chamber.

### Citation List

### Patent Literature

Patent document 1: U.S. Patent No. 5,865,441
Patent document 2: U.S. Patent No. 3,994,503
Patent document 3: UK patent No. 1,441,653
Patent document 4: EP Patent No. 2,110,558

### Summary of Invention

### Technical Problem

By the way, the above-described pump (hereinafter referred to as main pump) that pumps a toxic or flammable fluid is usually operated with the supply of electric power from a high-voltage power source of about 6.6 kV. On the other hand, the oil pump is operated with the supply of electric power from a low-voltage power source of about 400 V. Even if the oil pump is stopped due to a power failure or malfunction when the oil is being supplied into the seal chamber, there are cases where the operation of the main pump should be continued due to a situation that a plant cannot be stopped. However, in the conventional technology, it is possible to maintain the pressure in the seal chamber at the time of a power failure, but there is a lack of redundancy in the main pump operation.

Therefore, one aspect of the present invention provides a pump with an improved redundancy that enables the pump to continue its operation while preventing leakage of a fluid containing a harmful component, such as hydrogen sulfide. Such a pump is used, for example, in a plant for refining a fossil fuel, such as oil or natural gas. One aspect of the invention also provides a sealing system for use with such a pump.

In a plant for refining a fossil fuel, such as oil or natural gas, measures for preventing ignition of flammable gas are strictly required. Thus, one embodiment of the present invention provides a pump and a sealing system that can be used safely in an explosion-proof designated area, such as a plant for refining a fossil fuel, such as oil or natural gas.

A plant for refining a fossil fuel, such as oil or natural gas, is required to take necessary measures promptly in an emergency so that a small accident does not develop into a major accident, because such a plant handles a flammable gas or a toxic gas. Thus, one embodiment of the present invention provides a pump and a sealing system that can quickly take measures necessary to prevent fluid leakage in an emergency.

### Solution to Problem

One aspect of the present invention is a pump comprising: a rotational shaft; an impeller fixed to the rotational shaft; a casing that houses the impeller therein; a double mechanical seal; a seal chamber that houses the double mechanical seal therein; an oil reservoir configured to store oil; an oil supply line providing a fluid communication between the oil reservoir and the seal chamber; a first oil pump configured to pressurize the oil supplied from the oil reservoir and to deliver the oil to the seal chamber; a second oil pump arranged in parallel with the first oil pump, the second oil pump being configured to pressurize the oil supplied from the oil reservoir and to deliver the oil to the seal chamber; an oil outlet line coupled to the seal chamber; and a pressure retaining mechanism configured to retain pressure of the oil in the seal chamber.

In a preferred aspect of the present invention, the pump further comprises a system controller configured to activate the second oil pump based on a signal indicating an operation state of the first oil pump.

In a preferred aspect of the present invention, the second oil pump includes a steam turbine as a prime mover.

In a preferred aspect of the present invention, the pressure retaining mechanism comprises: a first check valve located between the first oil pump and the seal chamber; a second check valve located between the second oil pump and the seal chamber; at least one accumulator located between the first and second check valves and the seal chamber; and a shut-off valve attached to the oil outlet line.

In a preferred aspect of the present invention, the pump further comprises: a main power source coupled to the first oil pump; and a backup power source coupled to the second oil pump, wherein each of the first oil pump and the second oil pump has an electric motor as a prime mover.

In a preferred aspect of the present invention, the pump further comprises a third oil pump arranged in parallel with the first oil pump, the third oil pump being configured to pressurize the oil supplied from the oil reservoir and to deliver the oil to the seal chamber, the third oil pump having a steam turbine as a prime mover.

In a preferred aspect of the present invention, the pressure retaining mechanism comprises: a first check valve located between the first oil pump and the seal chamber; a second check valve located between the second oil pump and the seal chamber; a third check valve located between the third oil pump and the seal chamber; at least one accumulator located between the first, second, and third check valves and the seal chamber; and a shut-off valve attached to the oil outlet line.

One aspect of the present invention provides a sealing system comprising: a seal chamber for accommodating a double mechanical seal therein; an oil reservoir configured to store oil; an oil supply line providing a fluid communication between the oil reservoir and the seal chamber; a first oil pump configured to pressurize the oil supplied from the oil reservoir and to deliver the oil to the seal chamber; a second oil pump arranged in parallel with the first oil pump, the second oil pump being configured to pressurize the oil supplied from the oil reservoir and to deliver the oil to the seal chamber; an oil outlet line coupled to the seal chamber; and a pressure retaining mechanism configured to retain pressure of the oil in the seal chamber.

According to the present invention, the first oil pump as a regular pump and the second oil pump as a backup pump are provided. Therefore, when the first oil pump stops due to a power failure or malfunction, the second oil pump is promptly started to maintain the pressure in the seal chamber. As a result, the main pump can continue to operate at the time of the power failure and can increase the redundancy.

One aspect of the present invention is a pump comprising: a rotational shaft; an impeller fixed to the rotational shaft; a casing that houses the impeller therein; a double mechanical seal; a seal chamber that houses the double mechanical seal therein; an oil reservoir configured to store oil; an oil supply line providing a fluid communication between the oil reservoir and the seal chamber; an oil pump configured to pressurize the oil supplied from the oil reservoir and to deliver the oil to the seal chamber; a check valve located between the oil pump and the seal chamber; an oil outlet line coupled to the seal chamber; at least one accumulator located between the check valve and the seal chamber; and a shut-off valve attached to the oil outlet line, the shut-off valve comprising an explosion-proof valve.

In a preferred aspect of the present invention, the pump further comprises a system controller configured to detect an emergency state of the oil pump and close the shut-off valve.

In a preferred aspect of the present invention, the valve comprises a pneumatically driven valve or a hydraulically driven valve.

In a preferred aspect of the present invention, the pump further comprises: a working-fluid supply line coupled to the shut-off valve; and a working-fluid supply valve attached to the working-fluid supply line.

In a preferred aspect of the present invention, the system controller is configured to transmit an instruction signal to the working-fluid supply valve to open the working-fluid supply valve when the system controller detects an emergency state of the oil pump.

In a preferred aspect of the present invention, the system controller and the working-fluid supply valve are located in an area isolated from the shut-off valve by an isolation wall.

In a preferred aspect of the present invention, the system controller is configured to close the shut-off valve when a discharge pressure of the oil pump is lower than a threshold value.

In a preferred aspect of the present invention, the system controller is configured to open the working-fluid supply valve when a discharge pressure of the oil pump is lower than a threshold value.

In a preferred aspect of the present invention, the system controller is configured to close the shut-off valve when a rotating speed of the oil pump is lower than a threshold value.

In a preferred aspect of the present invention, the system controller is configured to open the working-fluid supply valve when a rotating speed of the oil pump is lower than a threshold value.

One aspect of the present invention provides a sealing system comprising: a seal chamber for accommodating a double mechanical seal therein; an oil reservoir configured to store oil; an oil supply line providing a fluid communication between the oil reservoir and the seal chamber; an oil pump configured to pressurize the oil supplied from the oil reservoir and to deliver the oil to the seal chamber; a check valve located between the oil pump and the seal chamber; an oil outlet line coupled to the seal chamber; at least one accumulator located between the check valve and the seal chamber; and a shut-off valve attached to the oil outlet line, the shut-off valve comprising an explosion-proof valve.

According to the present invention, the shut-off valve comprises the explosion-proof valve, which does not cause an accident due to ignition of a flammable gas. In particular, use of a pneumatically driven valve or a hydraulically driven valve as the shut-off valve can make it possible to provide a sealing system that can operate safely even in an area where a power supply condition is not fully established.

One aspect of the present invention is a pump comprising: a rotational shaft; an impeller fixed to the rotational shaft; a casing that houses the impeller therein; a double mechanical seal; a seal chamber that houses the double mechanical seal therein; an oil reservoir configured to store oil; an oil supply line providing a fluid communication between the oil reservoir and the seal chamber; an oil pump configured to pressurize the oil supplied from the oil reservoir and to deliver the oil to the seal chamber; a check valve located between the oil pump and the seal chamber; an oil outlet line coupled to the seal chamber; at least one accumulator located between the check valve and the seal chamber; and a shut-off valve attached to the oil outlet line, the shut-off valve comprising a motor-operated valve or an electromagnetic valve.

In a preferred aspect of the present invention, the pump further comprises a system controller configured to detect an emergency state of the oil pump and close the shut-off valve.

In a preferred aspect of the present invention, the system controller is configured to close the shut-off valve when the emergency state of the oil pump is detected.

In a preferred aspect of the present invention, the system controller is configured to close the shut-off valve when a discharge pressure of the oil pump is lower than a threshold value.

In a preferred aspect of the present invention, the system controller is configured to close the shut-off valve when a rotating speed of the oil pump is lower than a threshold value.

One aspect of the present invention provides a sealing system comprising: a seal chamber for accommodating a double mechanical seal therein; an oil reservoir configured to store oil; an oil supply line providing a fluid communication between the oil reservoir and the seal chamber; an oil pump configured to pressurize the oil supplied from the oil reservoir and to deliver the oil to the seal chamber; a check valve located between the oil pump and the seal chamber; an oil outlet line coupled to the seal chamber; at least one accumulator located between the check valve and the seal chamber; and a shut-off valve attached to the oil outlet line, the shut-off valve comprising a motor-operated valve or an electromagnetic valve.

According to the present invention, the shut-off valve comprises the motor-operated valve or the electromagnetic valve, which can be quickly closed in an emergency. Therefore, fluid leakage can be prevented before a minor accident develops into a major accident.

### Brief Description of Drawings

FIG. 1 is a cross-sectional view showing a centrifugal multistage pump (main pump) according to an embodiment of the present invention;
FIG. 2 is an enlarged view showing a shaft seal unit including a mechanical seal shown in FIG. 1, and is a schematic view showing an embodiment of a sealing system according to the present invention;
FIG. 3 is a schematic view showing another embodiment of the sealing system;
FIG. 4 is a schematic view showing still another embodiment of the sealing system;
FIG. 5 is a schematic view showing an embodiment of a sealing system including the mechanical seal shown in FIG 1;
FIG. 6 is a schematic view showing an embodiment of a sealing system including the mechanical seal shown in FIG. 1; and
FIG. 7 is a schematic view showing another embodiment of the sealing system.

### Description of Embodiments

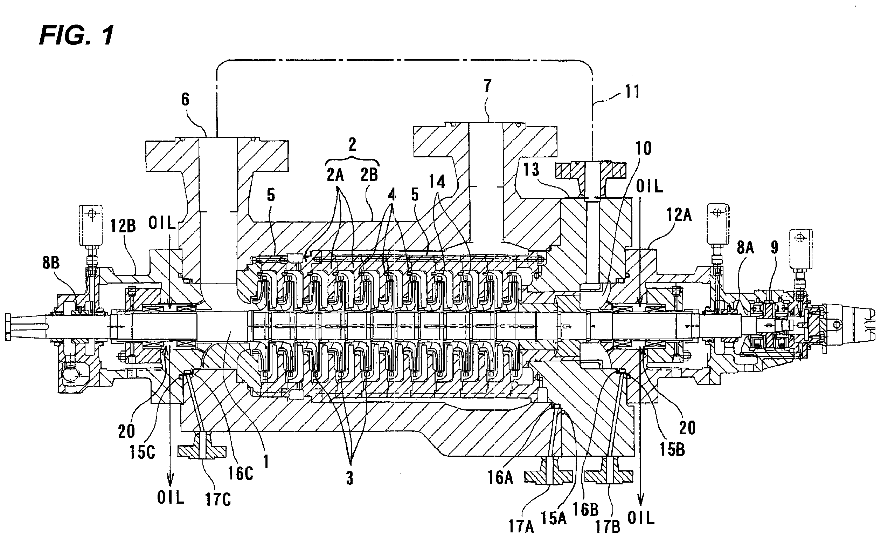

Embodiments of the present invention will be described below with reference to the drawings. FIG. 1 is a cross-sectional view showing a centrifugal multistage pump (main pump) according to an embodiment of the present invention. This pump is used in a plant for refining a fossil fuel, such as oil or natural gas, and is configured to pressurize a fluid (liquid) containing a volatile flammable component or a harmful component, such as hydrogen sulfide. The pump includes a rotational shaft 1 rotatably supported by radial bearings 8A and 8B and a thrust bearing 9, a plurality of impellers 3 arranged in tandem on the rotational shaft 1, a plurality of inner casings 2A that house the impellers 3 therein, and a barrel-type outer casing 2B that houses the inner casings 2A therein. The inner casings 2A and the outer casing 2B constitute a casing 2 having a double casing structure.

The plurality of impellers 3 are arranged so as to face in the same direction, and each impeller 3 is located in each inner casing 2A. A pin 4 is provided between each inner casing 2A and each guide vane 14, whereby a relative position between the inner casings 2A and the guide vanes 14 is fixed. Further, the inner casings 2A are fixed to each other by a plurality of through-bolts 5 extending along the rotational shaft 1. The outer casing 2B has a suction inlet 6 and a discharge outlet 7. An end of the rotational shaft 1 is coupled to a driving device (for example, a motor) which is not shown in the drawings, and the impellers 3 are rotated by this driving device.

With the above-described configuration, when the impellers 3 rotate, a fluid (for example, a liquid containing CO₂ or H₂S, or a supercritical fluid thereof) is sucked through the suction inlet 6 and directed to the impellers 3. The fluid is pressurized by the impellers 3 successively. A space between the inner casings 2A and the outer casing 2B is filled with the pressurized fluid, which is discharged through the discharge outlet 7. Such double-casing structure has an advantage that the outer casing 2B is subjected to pressure of the fluid and tensile stresses while the inner casings 2A are subjected to only compressive stresses. In contrast, a single casing structure could be complicated in structure if it is designed to satisfy both "a shape suitable for compression of the fluid" and "a shape capable of withstanding high pressure". In this regard, the double-casing structure is advantageous because the inner casing and the outer casing can be designed and manufactured separately such that the inner casing has "a shape suitable for compression of the fluid" and the outer casing has "a shape capable of retaining pressure (i.e., a shape that can achieve an excellent sealing capability and can provide a safety with no leakage of the fluid to the exterior)". In this embodiment, components which contact the fluid (e.g., the inner casings 2A, the outer casing 2B, and the impellers 3) are made of corrosion resistant material.

A casing cover 13 is secured to a discharge-side end of the casing 2. Further, a stuffing box 12A is secured to a side end of the casing cover 13. A stuffing box 12B is secured to a suction-side end of the casing 2. An O-ring 15A is provided between the casing 2 (the outer casing 2B in this example shown in FIG. 1) and the casing cover 13. Similarly, an O-ring 15B is provided between the casing cover 13 and the stuffing box 12A. Further, an O-ring 15C is provided between the casing 2 (the outer casing 2B in this example shown in FIG. 1) and the stuffing box 12B.

An annular groove 16A is formed in a contact surface of the casing 2 and the casing cover 13, an annular groove 16B is formed in a contact surface of the casing cover 13 and the stuffing box 12A, and an annular groove 16C is formed in a contact surface of the casing 2 and the stuffing box 12B. These annular grooves 16A, 16B, and 16C are in fluid communication with pressure detection ports 17A, 17B, and 17C, respectively. These pressure detection ports 17A, 17B, and 17C are coupled to non-illustrated pressure sensors, respectively, and these pressure sensors are coupled to an alarm device which is not shown in the drawings. This alarm device is configured to emit an alarm when an output value of the pressure sensor is increased to reach a predetermined value.

In the above structures, when the fluid leaks from the casing 2, the output value of the pressure sensor increases. When the output value of the pressure sensor reaches the above-mentioned predetermined value, the alarm device issues an alarm, thereby detecting fluid leakage. Therefore, the above structures can provide a highly safe pump.

A balancing chamber 10 for balancing a thrust load generated by a pressure difference between a suction side and a discharge side is provided at the discharge side of the casing 2. More specifically, the balancing chamber 10 is formed in the casing cover 13. This balancing chamber 10 is shaped so as to surround the rotational shaft 1, and is in fluid communication with the suction inlet 6 through a communication line 11. Therefore, pressure in the balancing chamber 10 is equal to pressure (i.e., suction pressure) in the suction inlet 6. Generally, a specific gravity of a supercritical fluid varies according to pressure. There are several ways of balancing the thrust load applied in the axial direction. For example, impellers may be arranged so as to face in opposite directions, or a balancing piston may be provided while impellers are arranged to face in the same direction. In the pump for use in handling the supercritical fluid, the above-described structures of this embodiment (i.e., the balancing chamber 10 and the communication line 11) are most suitable.

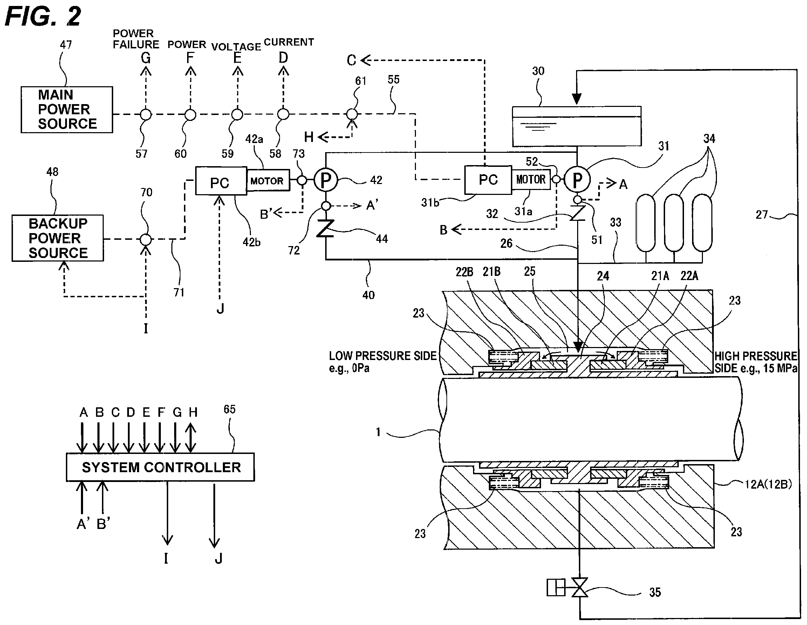

As shown in FIG. 1, mechanical seals 20 are provided at the suction side and the discharge side of the casing 2. These mechanical seals 20 are located in the stuffing boxes 12A and 12B, respectively. Hereinafter, a shaft seal unit including the mechanical seal 20 will be described with reference to FIG. 2.

FIG. 2 is an enlarged view showing a shaft seal unit including the mechanical seal 20 shown in FIG. 1, and is a schematic view showing an embodiment of the sealing system according to the present invention. As shown in FIG. 2, the mechanical seal 20 of the present embodiment is a double mechanical seal basically composed of two pairs of rotary seal members and stationary seal members arranged in back-to-back. More specifically, the mechanical seal 20 has two seal rings (first and second rotary seal members) 21A and 21B which are rotatable in unison with the rotational shaft 1, two seal ring bodies (first and second stationary seal members) 22A and 22B which are brought into sliding contact with the seal rings 21A and 21B, respectively, and springs (pressing mechanisms) 23 and 23 configured to press the seal ring bodies 22A and 22B against the seal rings 21A and 21B, respectively.

A sleeve 24 is secured to the rotational shaft 1, and the above-described seal rings 21A and 21B are secured to the outer circumferential surface of the sleeve 24. The above-described seal ring bodies 22A and 22B are supported by a stationary member. The two pairs of seal rings 21A and 21B and the seal ring bodies 22A and 22B are arranged symmetrically with respect to a plane that is perpendicular to the rotational shaft 1.

The mechanical seal 20 is located in the seal chamber 25. The seal chamber 25 is formed between the stuffing box 12A (or 12B) and the rotational shaft 1. An oil supply line 26 is coupled to the seal chamber 25, and an end of the oil supply line 26 is coupled to an oil tank (oil reservoir) 30. The oil supply line 26 is provided with a first oil pump 31 configured to pressurize oil, supplied from the oil tank 30, and deliver the oil to the seal chamber 25. The oil supply line 26 is further provided with a first check valve (non return valve) 32 located between the first oil pump 31 and the seal chamber 25. The first oil pump 31 includes an electric motor 31a as its prime mover.

A bypass line 40 is coupled to the oil supply line 26. Both ends of the bypass line 40 are coupled to the oil supply line 26, so that the bypass line 40 extends so as to bypass the first oil pump 31 and the first check valve 32. One end of the bypass line 40 is located between the oil tank 30 and the first oil pump 31, and the other end of the bypass line 40 is located between the first check valve 32 and the seal chamber 25. The bypass line 40 is provided with a second oil pump 42 and a second check valve 44. The second oil pump 42 and the second check valve 44 are arranged in parallel with the first oil pump 31 and the first check valve 32. The second oil pump 42 is configured to pressurize the oil supplied from the oil tank 30 through the bypass line 40, and to deliver the pressurized oil into the seal chamber 25. The second check valve 44 is located between the second oil pump 42 and the seal chamber 25, so that the backflow of the oil pressurized by the second oil pump 42 is prevented by the second check valve 44. The second oil pump 42 includes an electric motor 42a as its prime mover.

The first check valve 32 and the second check valve 44 allow the oil to flow only in a direction from the oil tank 30 toward the seal chamber 25. An oil outlet line 27 is coupled to the seal chamber 25, and the oil outlet line 27 communicates with the oil tank 30. With such a configuration, the oil is supplied from the oil tank 30 to the seal chamber 25 to fill the seal chamber 25, and the oil is then returned to the oil tank 30 through the oil outlet line 27. In this way, the oil circulates between the oil tank 30 and the seal chamber 25.

The first oil pump 31 and the second oil pump 42 are driven by the electric motors 31a and 42a, respectively, which are prime movers different from the prime mover of the main pump shown in FIG. 1. The first oil pump 31 and the second oil pump 42 are pumps that can supply the oil to the seal chamber 25 by increasing the oil pressure higher than the pressure of the fluid in the main pump. A gear pump may be used for the first oil pump 31 and the second oil pump 42. In the present embodiment, the first oil pump 31 is used as a regular pump, and the second oil pump 42 is used as a backup pump. The backup pump is operated when the regular pump stops due to a malfunction or other cause. When the first oil pump 31 or the second oil pump 42 is operated, the oil is supplied from the oil tank 30 into the seal chamber 25, and is then returned from the seal chamber 25 through the oil outlet line 27 to the oil tank 30.

Shut-off valves may be provided at both of the suction side and the discharge side of each of the first oil pump 31 and the second oil pump 42. Such shut-off valves can make it possible to replace a failed oil pump without draining all the oil in the oil supply line 26 and the oil outlet line 27 and without stopping the oil circulation. Specifically, by closing the shut-off valves at the suction side and the discharge side of the failed oil pump, the failed oil pump can be replaced while the operation of the other oil pump different from the failed oil pump is maintained.

A branch line 33 is coupled to the oil supply line 26, and three accumulators 34 are coupled to the branch line 33. The accumulators 34 are arranged in parallel. A connection point of the oil supply line 26 and the branch line 33 is located between the check valves 32 and 44 and the seal chamber 25.

A diaphragm (or a partition), not shown in the drawings, is disposed in each accumulator 34, and a gas, such as nitrogen gas, is enclosed in each accumulator 34. Part of the oil delivered to the seal chamber 25 is introduced into the three accumulators 34 through the branch line 33 and is accumulated in the accumulators 34. The oil accumulated in the accumulators 34 is pressurized by the gas pressure. Therefore, the accumulators 34 have a function of maintaining the pressure of the oil that has been supplied into the seal chamber 25.

In the present embodiment, the three accumulators 34 are provided, while the present invention is not limited to this embodiment. For example, a single accumulator may be provided, or two accumulators or four or more accumulators may be provided. In short, it is important that the pressure of the oil retained by the accumulator is higher than the pressure of the fluid pressurized by the rotation of the impellers 3 (see FIG. 1).

The pressure of the oil supplied to the seal chamber 25 is set to be higher than the pressure of the fluid pressurized by the main pump. For example, when the fluid (for example, supercritical fluid) is pressurized to about 15 MPa by the main pump, the pressure of the oil in the seal chamber 25 is maintained at about 16 MPa. Since the pressure of the oil in the seal chamber 25 is higher than the pressure of the fluid pressurized by the main pump, a small amount of oil passes through a gap between the seal rings 21A and 21B and the seal ring bodies 22A and 22B to the outside of the seal chamber 25. Therefore, the fluid pressurized by the rotating impellers 3 does not enter the seal chamber 25, and the leakage of the fluid to the outside of the pump is prevented. The oil that has passed through the gap between the low-pressure-side seal ring 21B and the low-pressure-side seal ring body 22B is discharged through a drain (not shown) to the outside of the pump.

A shut-off valve 35 is attached to the oil outlet line 27. When all of the main pump, the first oil pump 31, and the second oil pump 42 are stopped, the shut-off valve 35 is closed, so that the pressure of the oil in the seal chamber 25 can be kept higher than the pressure of the fluid in the main pump. As a result, leakage of the fluid can be prevented even when the oil pumps 31 and 42 are stopped. The shut-off valve 35 may comprise an electromagnetic valve, a motor-operated valve, a pneumatically driven valve, a hydraulically driven valve, or the like.

The first oil pump 31 and the second oil pump 42 are supplied with electric power from different power source systems. In the present embodiment, the first oil pump 31 is coupled to a main power source 47, so that electric power is supplied from the main power source 47 to the first oil pump 31. The second oil pump 42 is coupled to a backup power source 48, so that electric power is supplied from the backup power source 48 to the second oil pump 42. The backup power source 48 can be constituted by a battery or a diesel engine driven generator.

When the first oil pump 31 stops due to a power failure or other cause, or when it is detected that some trouble has occurred in the first oil pump 31 and the operation of the first oil pump 31 has to be stopped, the backup power source 48 supplies the electric power to the second oil pump 42 as a backup pump to activate the second oil pump 42. The second oil pump 42 can maintain the oil pressure in the seal chamber 25 while maintaining the oil circulation. As a result, the main pump can continue to operate while sealing the fluid safely, and the redundancy is increased.

In the present embodiment, in order to detect an emergency state in which the first oil pump 31 is stopped due to a power failure or malfunction, or must be stopped, a pressure detector 51 is arranged between the first oil pump 31 and the first check valve 32. The pressure detector 51 is configured to detect the discharge pressure of the first oil pump 31 and emit a signal A indicating the detected discharge pressure. The pressure detector 51 may comprise a pressure sensor, a pressure switch, a pressure transmitter, or the like. Further, the first oil pump 31 is provided with a rotating speed detector 52 configured to detect a rotating speed of the first oil pump 31 and to emit a signal B indicating the detected rotating speed. The rotating speed detector 52 may comprise, for example, a speedometer with a transmission function, such as a speed transmitter.

The first oil pump 31 includes a first pump controller 31b configured to control the operation of the first oil pump 31. When an interlock related to the operation of the first oil pump 31 itself is established, an interlock signal C is output from the first pump controller 31b. The interlock signal C is used as a signal for detecting the above-described emergency state of the first oil pump 31.

A power failure detector 57, a current measuring device 58, a voltage measuring device 59, and a power measuring device 60 are attached to a main power line 55 extending from the main power source 47 to the first oil pump 31. The power failure detector 57 is configured to emit a power failure detection signal G when the power failure detector 57 detects a power failure. The current measuring device 58, the voltage measuring device 59, and the power measuring device 60 are configured to emit signals D, E, and F, respectively, indicating current, voltage, and power, respectively, supplied to the first oil pump 31. Further, a power cutout device 61 is attached to the main power line 55. The power cutout device 61 has a function of detecting an overcurrent and cutting off the electric power. In addition, the power cutout device 61 may be configured to perform a power cut-off/power connecting operation in response to an external power cut-off/power connecting instruction. The power cutout device 61 may be configured to emit signals indicating a power cut-off state and a power connection state. In FIG. 2, the signal output from the power cutout device 61 and the signal input from the outside are collectively expressed as H.

The pressure detector 51, the rotating speed detector 52, the power failure detector 57, the current measuring device 58, the voltage measuring device 59, the power measuring device 60, and the power cutout device 61 are operation state detectors configured to emit the signals A to H indicating the operation states of the first oil pump 31. The signals A to H issued from these operation state detectors are sent to a system controller 65. The system controller 65 is configured to detect an emergency state of the first oil pump 31 based on the signals A to H and send an instruction signal I to the backup power source 48 and a power cutout device 70. The power cutout device 70 is attached to a backup power line 71 extending from the backup power source 48 to the second oil pump 42. The instruction signal I activates the backup power source 48, and activates the second oil pump 42 by switching the power cutout device 70 to energization. When the power of the backup power source 48 has already been supplied to the second oil pump 42, the system controller 65 sends an instruction signal J for starting the second oil pump 42 to a second pump controller 42b of the second oil pump 42.

The system controller 65 can start the second oil pump 42 promptly when the first oil pump 31 is in an emergency state, so that the second oil pump 42 can maintain the pressure in the seal chamber 25. As a result, the main pump can continue to operate while sealing the fluid safely, and the redundancy can be increased.

The shut-off valve 35 may comprise an electromagnetic valve configured to open when power is supplied to the shut-off valve 35 and to close when power is not supplied to the shut-off valve 35. In this case, it is preferable to supply a part of the electric power supplied to the first oil pump 31 or the second oil pump 42 in operation to the shut-off valve 35 via a changeover switch (not shown). With this configuration, if both the main power source 47 and the backup power source 48 cannot supply power to the shut-off valve 35, the shut-off valve 35 can be quickly closed, so that the pressure of the oil in the seal chamber 25 can be kept high.

In one embodiment, the system controller 65 may be configured to close the shut-off valve 35 when the discharge pressure of the second oil pump 42 decreases below a threshold value. For example, when the internal pressure of the main pump is 15 MPa and the oil pressure pressurized by the second oil pump 42 is 16 MPa, the threshold value is set to be higher than 15 MPa and lower than 16 MPa (for example, 15.8 MPa). The discharge pressure of the second oil pump 42 is detected by a pressure detector 72 located between the second oil pump 42 and the second check valve 44. The pressure detector 72 is configured to detect the discharge pressure of the second oil pump 42 and transmit a signal A' indicating the detected discharge pressure to the system controller 65. The system controller 65 closes the shut-off valve 35 when the discharge pressure of the second oil pump 42 indicated by the signal A' is lower than the threshold value.

In one embodiment, the system controller 65 may be configured to close the shut-off valve 35 when the rotating speed of the second oil pump 42 decreases below a threshold value. For example, when the rated rotating speed of the second oil pump 42 is 1500 min⁻¹, the threshold value is set to 1470 min⁻¹, which is 2% lower than 1500 min⁻¹, because the pressure is proportional to the square of the rotating speed. The rotating speed of the second oil pump 42 is detected by a rotating speed detector 73 attached to a rotational shaft of the second oil pump 42. The rotating speed detector 73 is configured to detect the rotating speed of the second oil pump 42 and transmit a signal B' indicating the detected rotating speed to the system controller 65. The rotating speed detector 73 may comprise, for example, a speedometer with a transmission function, such as a speed transmitter. The system controller 65 closes the shut-off valve 35 when the rotating speed of the second oil pump 42 indicated by the signal B' is lower than the threshold value.

The first check valve 32 located between the first oil pump 31 and the seal chamber 25, the second check valve 44 located between the second oil pump 42 and the seal chamber 25, and at least one accumulator 34 located between the check valves 32, 44 and the seal chamber 25, and the shut-off valve 35 attached to the oil outlet line 27 constitute a pressure retaining mechanism that retains the pressure of the oil in the seal chamber 25 when the oil pumps 31 and 42 are not in operation.

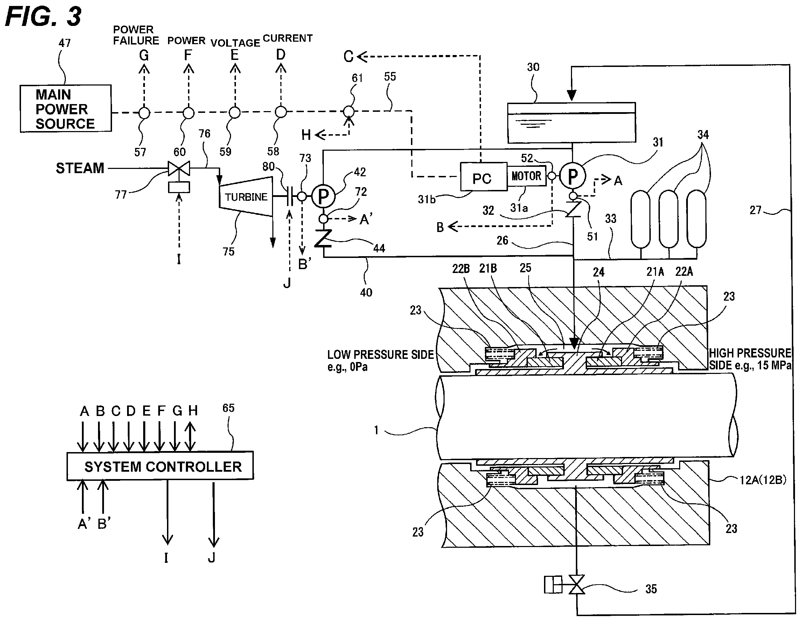

Depending on the plant, the backup power source 48 may not be installed. FIG. 3 is a schematic diagram showing another embodiment of a sealing system that does not include the backup power source 48. Configuration and operation of the present embodiment, which will not be particularly described, are the same as those of the embodiment shown in FIG. 2, and repetitive descriptions thereof are omitted. In this embodiment, the prime mover of the second oil pump 42 as a backup pump is not an electric motor but a steam turbine 75. Specifically, an energy of steam when expanding is changed into a rotating force by the steam turbine 75, and the rotating force is used as the driving force of the second oil pump 42.

The steam turbine 75 is coupled to a steam supply line 76, and a steam supply valve 77 is attached to the steam supply line 76. The steam supply valve 77 may comprise an electromagnetic valve, a motor-operated valve, a pneumatically driven valve, a hydraulically driven valve, or the like. When the steam supply valve 77 is opened, high-pressure steam is supplied to the steam turbine 75 through the steam supply line 76. A clutch 80 is provided between a drive shaft of the steam turbine 75 and an impeller (not shown) of the second oil pump 42. When the clutch 80 is engaged, the torque of the steam turbine 75 is transmitted to the impeller of the second oil pump 42, and the second oil pump 42 is started to operate.

In the present embodiment, no electric power is used to drive the second oil pump 42. When the first oil pump 31 as a regular pump stops due to a power failure or malfunction, the second oil pump 42 including the steam turbine 75 as a prime mover is operated. Therefore, the second oil pump 42 can maintain the oil pressure in the seal chamber 25 by maintaining the oil circulation. As a result, the main pump can continue to operate while the fluid is safely sealed, and the redundancy can be increased.

The configurations for detecting an emergency state in which the first oil pump 31 has stopped or must be stopped due to a power failure or malfunction are basically the same as those of the embodiment shown in FIG. 2. Specifically, the signals A to H described above are sent to the system controller 65. The system controller 65 detects the emergency state of the first oil pump 31 based on the signals A to H, sends the instruction signal I to the steam supply valve 77 to open the steam supply valve 77, and further sends the instruction signal J to the clutch 80 to engage the clutch 80, whereby the second oil pump 42 is started. If the steam has already been supplied to the steam turbine 75, the system controller 65 sends the instruction signal J to the clutch 80 to engage the clutch 80.

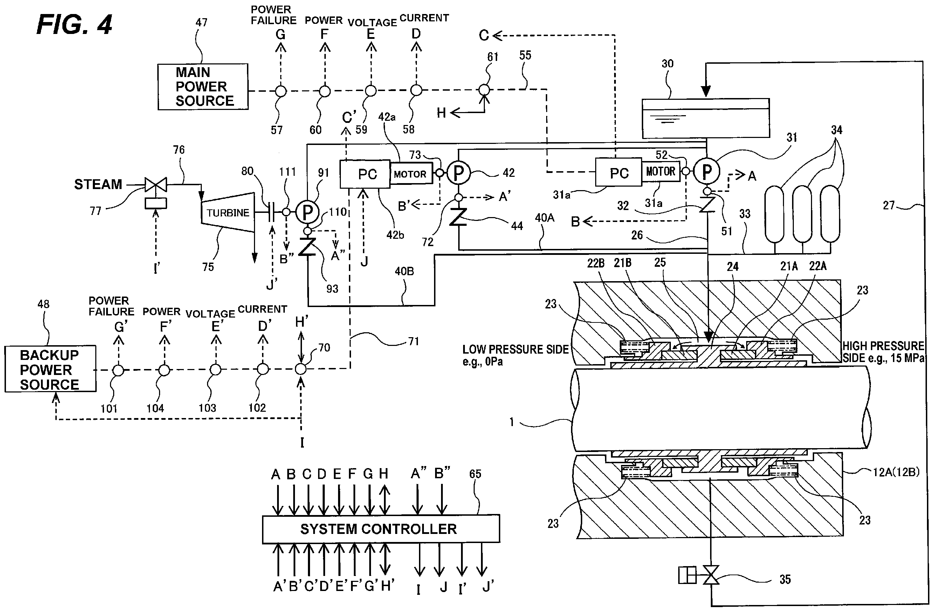

FIG. 4 is a schematic view showing still another embodiment of the sealing system. The same components as those shown in FIGS. 2 and 3 are denoted by the same reference numerals, and repetitive descriptions thereof are omitted. In the present embodiment, a single first oil pump 31 as a regular pump, and a second oil pump 42 and a third oil pump 91 as backup pumps are provided. The second oil pump 42 is a motor-driven oil pump driven by the backup power source 48, and the third oil pump 91 is a turbine-driven oil pump driven by the steam turbine 75. The second oil pump 42 of this embodiment has the same configuration as the second oil pump 42 of the embodiment shown in FIG. 2, and the third oil pump 91 of this embodiment has the same configuration as the second oil pump 42 of the embodiment shown in FIG. 3.

A first bypass line 40A and a second bypass line 40B are coupled to the oil supply line 26. Both ends of each of the first bypass line 40A and the second bypass line 40B are coupled to the oil supply line 26. More specifically, ends of the first bypass line 40A and the second bypass line 40B are located between the oil tank 30 and the first oil pump 31, and the other ends of the first bypass line 40A and the second bypass line 40B are located between the first check valve 32 and the seal chamber 25. The first bypass line 40A is provided with the second oil pump 42 and the second check valve 44. The second bypass line 40B is provided with the third oil pump 91 and the third check valve 93. The second check valve 44 is located between the second oil pump 42 and the seal chamber 25, and the third check valve 93 is located between the third oil pump 91 and the seal chamber 25.

The second oil pump 42 and the second check valve 44 are arranged in parallel with the first oil pump 31 and the first check valve 32. The second oil pump 42 is arranged so as to be able to pressurize the oil supplied from the oil tank 30 through the first bypass line 40A, and to deliver the pressurized oil to the seal chamber 25. The third oil pump 91 and the third check valve 93 are also arranged in parallel with the first oil pump 31 and the first check valve 32. The third oil pump 91 is arranged so as to be able to pressurize the oil supplied from the oil tank 30 through the second bypass line 40B, and to deliver the pressurized oil to the seal chamber 25. The third check valve 93 allows the oil to flow only in the direction from the oil tank 30 toward the seal chamber 25.

In the present embodiment, the pressure detector 72 is arranged between the second oil pump 42 and the second check valve 44 in order to detect an emergency state in which the second oil pump 42 has stopped or must be stopped. The pressure detector 72 is configured to detect the discharge pressure of the second oil pump 42 and to emit the signal A' indicating the detected discharge pressure. Further, the second oil pump 42 is provided with the rotating speed detector 73 configured to detect the rotating speed of the second oil pump 42 and to emit the signal B' indicating the detected rotating speed.

The second oil pump 42 includes the second pump controller 42b configured to control its operation. When an interlock related to the operation of the second oil pump 42 itself is established, an interlock signal C' is output from the second pump controller 42b. The interlock signal C' is used as a signal for detecting the above-described emergency state of the second oil pump 42.

A power failure detector 101, a current measuring device 102, a voltage measuring device 103, and a power measuring device 104 are attached to the backup power line 71 extending from the backup power source 48 to the second oil pump 42. The power failure detector 101 is configured to emit a power failure detection signal G' when the power failure detector 101 detects a power failure of the backup power source 48. The current measuring device 102, the voltage measuring device 103, and the power measuring device 104 are configured to emit signals D', E', and F' indicating the current, the voltage, and the power, respectively, supplied to the second oil pump 42. Further, the power cutout device 70 is disposed on the backup power line 71. The power cutout device 70 has a function of detecting an overcurrent and cutting off the power. In addition, the power cutout device 70 may be configured to perform a power cut-off/power connecting operation in response to an external power cut-off/power connecting instruction. Moreover, the power cutout device 70 may be configured to emit signals indicating a power cut-off state and a power connection state. In FIG. 4, the signal output from the power cutout device 70 and the signal input from the outside are collectively expressed as H'.

The signals A to H indicating the operation states of the first oil pump 31 are sent to the system controller 65. The system controller 65 is configured to detect an emergency state of the first oil pump 31 based on the signals A to H, and send the instruction signal I to the backup power source 48 and the power cutout device 70. The instruction signal I activates the backup power source 48, and activates the second oil pump 42 by switching the power cutout device 70 to energization. When the power of the backup power source 48 has already been supplied to the second oil pump 42, the system controller 65 sends the instruction signal J for starting the second oil pump 42 to the second pump controller 42b of the second oil pump 42. In this way, the second oil pump 42 as a backup pump is operated.

The pressure detector 72, the rotating speed detector 73, the power failure detector 101, the current measuring device 102, the voltage measuring device 103, the power measuring device 104, and the power cutout device 70 are operation state detectors configured to emit the signals A' to H' each indicating the operation state of the second oil pump 42. The signals A' to H' from these operation state detectors are also sent to the system controller 65. The system controller 65 is configured to detect an emergency state of the second oil pump 42 based on the signals A' to H', and sends the instruction signal I' for starting the third oil pump 91 to the steam supply valve 77 to open the steam supply valve 77. Further, the system controller 65 is configured to send the instruction signal J' to the clutch 80 to engage the clutch 80, whereby the third oil pump 91 is started. If the steam has already been supplied to the steam turbine 75, the system controller 65 sends the instruction signal J' to the clutch 80 to engage the clutch 80.

According to the present embodiment, when both the main power source 47 and the backup power source 48 have failed, the third oil pump 91 including the steam turbine 75 as a prime mover is operated. Therefore, the third oil pump 91 can maintain the oil circulation and can therefore maintain the oil pressure in the seal chamber 25. As a result, the main pump can continue to operate while the fluid is safely sealed, and the redundancy can be increased.

Furthermore, in the event that all of the first oil pump 31, the second oil pump 42, and the third oil pump 91 are stopped, the shut-off valve 35 is closed together with the stoppage of the main pump, whereby the pressure in the seal chamber 25 can be kept higher than the pressure of the fluid pressurized by the main pump. Therefore, the main pump can be stopped while safely preventing leakage of fluid to the outside.

In one embodiment, the system controller 65 may close the shut-off valve 35 when the discharge pressure of the third oil pump 91 decreases below a threshold value. For example, when the internal pressure of the main pump is 15 MPa, and the oil pressure pressurized by the third oil pump 91 is 16 MPa, the threshold value is set to be higher than 15 MPa and lower than 16 MPa (for example, 15.8 MPa). The discharge pressure of the third oil pump 91 is detected by a pressure detector 110 arranged between the third oil pump 91 and the third check valve 93. This pressure detector 110 is configured to detect the discharge pressure of the third oil pump 91 and to transmit a signal A" indicating the detected discharge pressure to the system controller 65. The system controller 65 is configured to close the shut-off valve 35 when the discharge pressure of the third oil pump 91 indicated by the signal A" is lower than the threshold value.

In one embodiment, the system controller 65 may close the shut-off valve 35 when the rotating speed of the third oil pump 91 decreases below a threshold value. For example, when the rated rotating speed of the third oil pump 91 is 1500 min⁻¹, the threshold is set to 1470 min⁻¹, which is 2% lower than 1500 min⁻¹, because the pressure is proportional to the square of the rotating speed. The rotating speed of the third oil pump 91 is detected by a rotating speed detector 111 attached to the rotational shaft of the third oil pump 91. The rotating speed detector 111 is configured to detect the rotating speed of the third oil pump 91 and to transmit a signal B" indicating the detected rotating speed to the system controller 65. The system controller 65 is configured to close the shut-off valve 35 when the rotating speed of the third oil pump 91 indicated by the signal B" is lower than the threshold value.

In the embodiment shown in FIG. 4, the first check valve 32 located between the first oil pump 31 and the seal chamber 25, the second check valve 44 located between the second oil pump 42 and the seal chamber 25, the third check valve 93 located between the third oil pump 91 and the seal chamber 25, at least one accumulator 34 located between the check valves 32, 44, 93 and the seal chamber 25, and the shut-off valve 35 attached to the oil outlet line 27 constitute a pressure retaining mechanism that retains the oil pressure in the seal chamber 25 when the oil pumps 31, 42, 91 are not in operation.

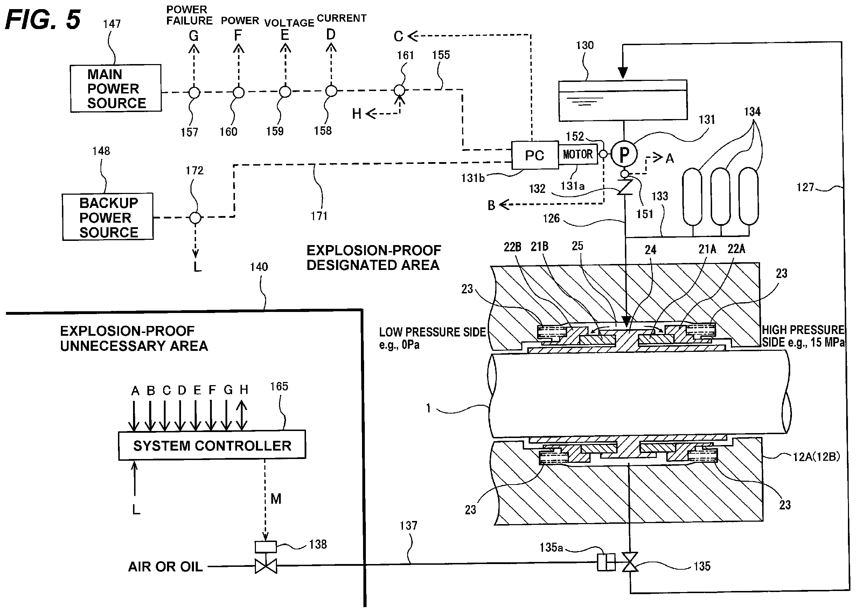

FIG. 5 is a schematic view showing an embodiment of a sealing system including the mechanical seal 20 shown in FIG. 1. As shown in FIG. 5, the mechanical seal 20 of the present embodiment is a double mechanical seal basically composed of two pairs of rotary seal members and stationary seal members arranged in back-to-back. More specifically, the mechanical seal 20 has two seal rings (first and second rotary seal members) 21A and 21B which are rotatable in unison with the rotational shaft 1, two seal ring bodies (first and second stationary seal members) 22A and 22B which are brought into sliding contact with the seal rings 21A and 21B, respectively, and springs (pressing mechanisms) 23 and 23 configured to press the seal ring bodies 22A and 22B against the seal rings 21A and 21B, respectively.

Sleeve 24 is secured to the rotational shaft 1, and the above-described seal rings 21A and 21B are secured to the outer circumferential surface of the sleeve 24. The above-described seal ring bodies 22A and 22B are supported by a stationary member. The two pairs of seal rings 21A and 21B and the seal ring bodies 22A and 22B are arranged symmetrically with respect to a plane that is perpendicular to the rotational shaft 1.

The mechanical seal 20 is located in the seal chamber 25. The seal chamber 25 is formed between stuffing box 12A (or 12B) and the rotational shaft 1. An oil supply line 126 is coupled to the seal chamber 25, and an end of the oil supply line 126 is coupled to an oil tank (oil reservoir) 130. The oil supply line 126 is provided with an oil pump 131 for pressurizing oil supplied from the oil tank 130 and supplying the pressurized oil to the seal chamber 25, and a check valve 132 located between the oil pump 131 and the seal chamber 25. Further, a branch line 133 is coupled to the oil supply line 126, and three accumulators 134 are coupled to the branch line 133. These accumulators 134 are arranged in parallel. A connection point of the oil supply line 126 and the branch line 133 is located between the check valve 132 and the seal chamber 25.

A diaphragm (or a partition), not shown in the drawings, is disposed in each accumulator 134, and a gas, such as nitrogen gas, is enclosed in each accumulator 134. Part of the oil delivered to the seal chamber 25 is introduced into the three accumulators 134 through the branch line 133 and is accumulated in the accumulators 134. The oil accumulated in the accumulators 134 is pressurized by the gas pressure. Therefore, the accumulators 134 have a function of maintaining the pressure of the oil that has been supplied into the seal chamber 25.

In the present embodiment, the three accumulators 134 are provided, while the present invention is not limited to this embodiment. For example, a single accumulator may be provided, or two accumulators or four or more accumulators may be provided. In short, it is important that the pressure of the oil retained by the accumulator is higher than the pressure of the fluid pressurized by the rotation of the impellers 3 (see FIG. 1).

The check valve 132 allows the oil to flow only in the direction from the oil tank 130 toward the seal chamber 25. An oil outlet line 127 is further coupled to the seal chamber 25. This oil outlet line 127 communicates with the oil tank 130. With such a configuration, the oil is supplied from the oil tank 130 to the seal chamber 25 to fill the seal chamber 25, and is then returned to the oil tank 130 through the oil outlet line 127. In this way, the oil circulates between the oil tank 130 and the seal chamber 25. The oil outlet line 127 is provided with a shut-off valve 135. In an emergency, such as a power failure, the shut-off valve 135 is closed to stop the oil circulation.

The pressure of the oil supplied to the seal chamber 25 is set to be higher than the pressure of the fluid pressurized by the main pump. For example, when the fluid (for example, supercritical fluid) is pressurized to about 15 MPa by the main pump, the pressure of the oil in the seal chamber 25 is maintained at about 16 MPa. Since the pressure of the oil in the seal chamber 25 is higher than the pressure of the fluid pressurized by the main pump, a small amount of oil passes through a gap between the seal rings 21A and 21B and the seal ring bodies 22A and 22B to the outside of the seal chamber 25. Therefore, the fluid pressurized by the rotating impellers 3 does not enter the seal chamber 25, and the leakage of the fluid to the outside of the pump is prevented. The oil that has passed through the gap between the low-pressure-side seal ring 21B and the low-pressure-side seal ring body 22B is discharged through a drain (not shown) to the outside of the pump.

When the oil pump 131 stops due to a power failure or other cause, the shut-off valve 135 is closed, so that the oil flow is stopped. In this state, the pressurization of the oil by the oil pump 131 is stopped, while the pressure of the oil existing between the check valve 132 and the shut-off valve 135 (i.e., the oil pressure in the seal chamber 25) is maintained by the accumulators 134. Therefore, even when the oil pump 131 is stopped, the pressurized fluid does not enter the seal chamber 25, and leakage of the fluid to the outside of the pump is prevented.

The oil pump 131 is a pump capable of increasing the oil pressure higher than the pressure of the fluid in the pump, and capable of supplying the oil to the seal chamber 25 and circulating the oil. A gear pump or the like may be used for the oil pump 131.

The shut-off valve 135 is an explosion-proof valve, so that the shut-off valve 135 does not ignite a flammable gas in case the flammable gas in the plant leaks and contacts the shut-off valve 135. The explosion-proof shut-off valve 135 may comprise, for example, a pneumatically driven valve, a hydraulically driven valve, or the like, but is not limited to these examples. The pneumatically driven valve and the hydraulically driven valve have advantages that the structure is simple and a large valve driving force can be obtained. Therefore, the pneumatically driven valve and the hydraulically driven valve can be reliably closed in an emergency. Furthermore, there is an advantage that the pneumatically driven valve and the hydraulically driven valve can be used as they are in an explosion-proof designated area. In contrast, an electric shut-off valve is required to have a special explosion-proof structure in order to prevent ignition due to electric leakage or short circuit.

Furthermore, even in a region where the power supply condition is unstable and even if the power source does not work, air or oil can be supplied to the shut-off valve 135 from an air supply system or oil supply system which works independently of the power source. Therefore, the shut-off valve 135 composed of a pneumatically driven valve or a hydraulically driven valve can reliably perform an emergency closing operation and can maintain its closed state.

The shut-off valve 135 is required to have a valve element which can operate quickly and has an excellent sealing capability. A ball butterfly valve may be used as the valve element that satisfies these requirements, but the valve element is not limited to this type, and any valve element may be used as long as it has a quick operation capability and an excellent sealing capability. For example, the valve element of the shut-off valve 135 may be a globe valve.

In one embodiment shown in FIG. 5, the shut-off valve 135 is a pneumatically driven valve or a hydraulically driven valve. The shut-off valve 135 is coupled to a working-fluid supply line 137, which delivers air or oil to an actuator (e.g., a piston) 135a of the shut-off valve 135. A working-fluid supply valve 138 is attached to the working-fluid supply line 137. The working-fluid supply valve 138 is disposed in an explosion-proof unnecessary area that is isolated from the explosion-proof designated region by an isolation wall 140. Therefore, an electromagnetic valve or a motor-operated valve can be used as the working-fluid supply valve 138. When the working-fluid supply valve 138 is opened, air or oil is supplied to the actuator 135a of the shut-off valve 135 through the working-fluid supply line 137, so that the shut-off valve 135 is closed.

The oil pump 131 includes an electric motor 131a as its prime mover. In the present embodiment, the oil pump 131 is coupled to a main power source 147 and a backup power source 148. Normally, power is supplied from the main power source 147 to the oil pump 131. When the main power source 147 cannot supply the power due to a power failure or other cause, power is supplied from the backup power source 148 to the oil pump 131. The backup power source 148 can be constituted by a battery or a diesel engine driven generator.

Although one oil pump 131 is illustrated in FIG. 5, two or more oil pumps 131 including a regular pump and a backup pump may be provided. In that case, an electric motor of the regular pump may be supplied with the electric power from the main power source 147, and an electric motor of the backup pump may be supplied with the electric power from the backup power source 148. The prime mover of the backup pump may be a steam turbine, instead of the electric motor.

In order to detect an emergency state in which the oil pump 131 must be stopped, a pressure detector 151 is arranged between the oil pump 131 and the check valve 132. The pressure detector 151 is configured to detect the discharge pressure of the oil pump 131, and to emit a signal A indicating the detected discharge pressure. The pressure detector 151 may comprise a pressure sensor, a pressure switch, a pressure transmitter, or the like. Furthermore, the oil pump 131 is provided with a rotating speed detector 152 which is configured to detect the rotating speed of the oil pump 131 and to emit a signal B indicating the detected rotating speed. The rotating speed detector 152 may comprise, for example, a speedometer with a transmission function, such as a speed transmitter.

The oil pump 131 includes a pump controller 131b configured to control the operation of the oil pump 131. When an interlock related to the operation of the oil pump 131 itself is established, an interlock signal C is output from the pump controller 131b. The interlock signal C is used as a signal for detecting the above-described emergency state of the oil pump 131.

A power failure detector 157, a current measuring device 158, a voltage measuring device 159, and a power measuring device 160 are attached to a main power line 155 extending from the main power source 147 to the oil pump 131. The power failure detector 157 is configured to emit a power failure detection signal G when the power failure detector 157 detects a power failure. The current measuring device 158, the voltage measuring device 159, and the power measuring device 160 are configured to emit signals D, E, and F indicating the current, voltage, and power, respectively, supplied to the oil pump 131.

Further, a power cutout device 161 is disposed on the main power line 155. This power cutout device 161 has a function of detecting an overcurrent and cutting off the electric power. In addition, the power cutout device 161 may be configured to perform a power cut-off/power connecting operation in response to an external power cut-off/power connecting instruction. Further, the power cutoff device 161 may be configured to emit signals indicating a power cutoff state and a power connection state. In FIG. 5, the signal output from the power cutout device 161 and the signal input from the outside are collectively expressed as H.

A backup-power failure detector 172 is attached to a backup power line 171 extending from the backup power source 148 to the oil pump 131. The backup-power failure detector 172 is configured to detect a failure of the backup power source 148 and emit a signal L indicating the failure of the backup power source 148.

Each of the oil pump 131, the power sources 147, 148, the pressure detector 151, the rotating speed detector 152, the power failure detector 157, the current measuring device 158, the voltage measuring device 159, the power measuring device 160, the power cutout device 161, and the backup-power failure detector 172 has an explosion-proof structure, and is arranged in an explosion-proof designated area.

The pressure detector 151, the rotating speed detector 152, the power failure detector 157, the current measuring device 158, the voltage measuring device 159, the power measuring device 160, the power cutout device 161, and the backup-power failure detector 172 are operation state detectors that emit the signals A to H and the signal L indicating the operation states of the oil pump 131. The signals A to H and the signal L from these operation state detectors are sent to the system controller 165. The system controller 165 is configured to detect an emergency state of the oil pump 131 based on the signals A to H and the signal L and to transmit an instruction signal M to the working-fluid supply valve 138. Upon receiving the instruction signal M, the working-fluid supply valve 138 is opened, so that air or oil is supplied through the working-fluid supply line 137 to the actuator 135a of the shut-off valve 135. As a result, the shut-off valve 135 is closed.

As well as the working-fluid supply valve 138, the system controller 165 is located in an explosion-proof unnecessary area isolated by the isolation wall 140 from the explosion-proof designated area where the shut-off valve 135 is disposed. An operator may remotely manipulate the shut-off valve 135 from a safe place to close the shut-off valve 135.

According to the present embodiment, the system controller 165 can quickly close the shut-off valve 135 by opening the working-fluid supply valve 138 when the oil pump 131 is in an emergency state. Specifically, even when both the main power source 147 and the backup power source 148 cannot be used, the present embodiment can provide the sealing system that can avoid a danger of ignition of a flammable gas and can prevent the leakage of fluid from the main pump.

The above-described check valve 132 located between the oil pump 131 and the seal chamber 25, at least one accumulator 134 located between the check valve 132 and the seal chamber 25, and the shut-off valve 135 attached the oil outlet line 127 constitute a pressure retaining mechanism that retains the pressure of the oil in the seal chamber 25 when the oil pump 131 is not in operation.

In one embodiment, the system controller 165 may close the shut-off valve 135 when the discharge pressure of the oil pump 131 decreases below a threshold value. For example, when the internal pressure of the main pump is 15 MPa and the oil pressure pressurized by the oil pump 131 is 16 MPa, the threshold value is set to be higher than 15 MPa and lower than 16 MPa (for example, 15.8 MPa). The discharge pressure of the oil pump 131 is detected by the pressure detector 151 located between the oil pump 131 and the check valve 132. The pressure detector 151 is configured to detect the discharge pressure of the oil pump 131, and to transmit the signal A indicating the detected discharge pressure to the system controller 165. When the discharge pressure of the oil pump 131 indicated by the signal A is lower than the threshold value, the system controller 165 opens the working-fluid supply valve 138, so that air or oil is supplied to the actuator 135a of the shut-off valve 135 to thereby close the shut-off valve 135.

In one embodiment, the system controller 165 may close the shut-off valve 135 when the rotating speed of the oil pump 131 decreases below a threshold value. For example, when the rated rotating speed of the oil pump 131 is 1500 min⁻¹, the threshold value is set to 1470 min⁻¹, which is 2% lower than 1500 min⁻¹, because the pressure is proportional to the square of the rotating speed. The rotating speed of the oil pump 131 is detected by the rotating speed detector 152 attached to the rotational shaft of the oil pump 131. The rotating speed detector 152 is configured to detect the rotating speed of the oil pump 131 and transmit the signal B indicating the detected rotating speed to the system controller 165. When the rotating speed of the oil pump 131 indicated by the signal B is lower than the threshold value, the system controller 165 opens the working-fluid supply valve 138, so that air or oil is supplied to the actuator 135a of the shut-off valve 135 to thereby close the shut-off valve 135.

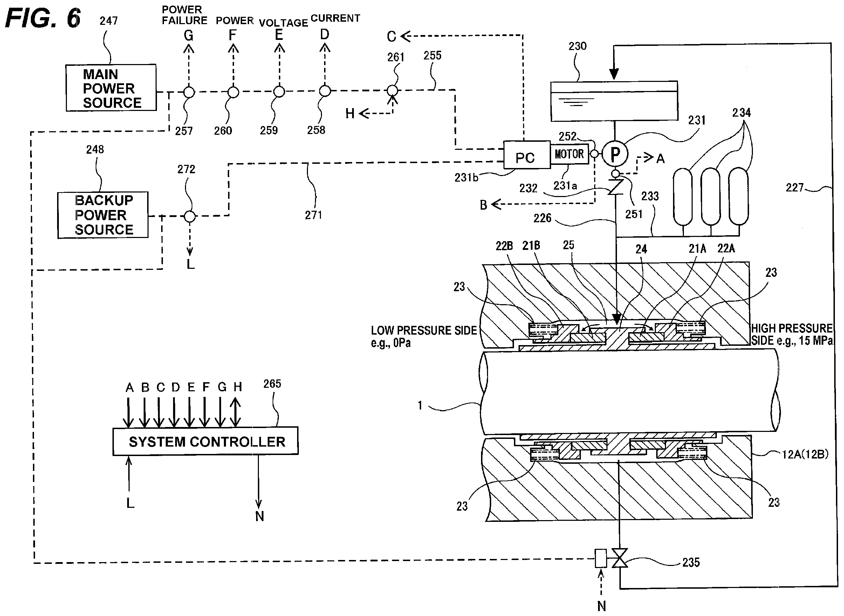

FIG. 6 is a schematic view showing an embodiment of a sealing system including the mechanical seal 20 shown in FIG. 1. As shown in FIG. 6, the mechanical seal 20 of the present embodiment is a double mechanical seal basically composed of two pairs of rotary seal members and stationary seal members arranged in back-to-back. More specifically, the mechanical seal 20 has two seal rings (first and second rotary seal members) 21A and 21B which are rotatable in unison with the rotational shaft 1, two seal ring bodies (first and second stationary seal members) 22A and 22B which are brought into sliding contact with the seal rings 21A and 21B, respectively, and springs (pressing mechanisms) 23 and 23 configured to press the seal ring bodies 22A and 22B against the seal rings 21A and 21B, respectively.

Sleeve 24 is secured to the rotational shaft 1, and the above-described seal rings 21A and 21B are secured to the outer circumferential surface of the sleeve 24. The above-described seal ring bodies 22A and 22B are supported by a stationary member. The two pairs of seal rings 21A and 21B and the seal ring bodies 22A and 22B are arranged symmetrically with respect to a plane that is perpendicular to the rotational shaft 1.

The mechanical seal 20 is arranged in the seal chamber 25. The seal chamber 25 is formed between the stuffing box 12A (or 12B) and the rotational shaft 1. An oil supply line 226 is coupled to the seal chamber 25. An end of the oil supply line 226 is coupled to an oil tank (oil reservoir) 230. The oil supply line 226 is provided with an oil pump 231 configured to pressurize oil supplied from the oil tank 230 and supply the pressurized oil to the seal chamber 25, and a check valve 232 located between the oil pump 231 and the seal chamber 25. Further, a branch line 233 is coupled to the oil supply line 226, and three accumulators 234 are coupled to the branch line 233. These three accumulators 234 are arranged in parallel. A connection point of the oil supply line 226 and the branch line 233 is located between the check valve 232 and the seal chamber 25.

A diaphragm (or a partition), not shown in the drawings, is disposed in each accumulator 234, and a gas, such as nitrogen gas, is enclosed in each accumulator 234. Part of the oil delivered to the seal chamber 25 is introduced into the three accumulators 234 through the branch line 233 and is accumulated in the accumulators 234. The oil accumulated in the accumulators 234 is pressurized by the gas pressure. Therefore, the accumulators 234 have a function of maintaining the pressure of the oil that has been supplied into the seal chamber 25.

In the present embodiment, the three accumulators 234 are provided, while the present invention is not limited to this embodiment. For example, a single accumulator may be provided, or two accumulators or four or more accumulators may be provided. In short, it is important that the pressure of the oil retained by the accumulator is higher than the pressure of the fluid pressurized by the rotation of the impellers 3 (see FIG. 1).

The check valve 232 allows the oil to flow only in the direction from the oil tank 230 toward the seal chamber 25. An oil outlet line 227 is further coupled to the seal chamber 25. The oil outlet line 227 communicates with the oil tank 230. With such a configuration, the oil is supplied from the oil tank 230 to the seal chamber 25 to fill the seal chamber 25, and is then returned to the oil tank 230 through the oil outlet line 227. In this way, the oil circulates between the oil tank 230 and the seal chamber 25. The oil outlet line 227 is provided with a shut-off valve 235. In an emergency, such as a power failure, the shut-off valve 235 is closed to stop the oil circulation.

The pressure of the oil supplied to the seal chamber 25 is set to be higher than the pressure of the fluid pressurized by the main pump. For example, when the fluid (for example, supercritical fluid) is pressurized to about 15 MPa by the main pump, the pressure of the oil in the seal chamber 25 is maintained at about 16 MPa. Since the pressure of the oil in the seal chamber 25 is higher than the pressure of the fluid pressurized by the main pump, a small amount of oil passes through a gap between the seal rings 21A and 21B and the seal ring bodies 22A and 22B to the outside of the seal chamber 25. Therefore, the fluid pressurized by the rotating impellers 3 does not enter the seal chamber 25, and the leakage of the fluid to the outside of the pump is prevented. The oil that has passed through the gap between the low-pressure-side seal ring 21B and the low-pressure-side seal ring body 22B is discharged through a drain (not shown) to the outside of the pump.

When the oil pump 231 stops due to a power failure or other cause, the shut-off valve 235 is closed, so that the oil flow is stopped. In this state, the pressurization of the oil by the oil pump 231 is stopped, while the pressure of the oil existing between the check valve 232 and the shut-off valve 235 (i.e., the oil pressure in the seal chamber 25) is maintained by the accumulators 234. Therefore, even when the oil pump 231 is stopped, the pressurized fluid does not enter the seal chamber 25, and leakage of the fluid to the outside of the pump is prevented.

The oil pump 231 is a pump capable of increasing the oil pressure higher than the pressure of the fluid in the pump, and capable of supplying the oil to the seal chamber 25 and further circulating the oil. A gear pump or the like may be used for the oil pump 231.

The shut-off valve 235 is a motor-operated valve or an electromagnetic valve having a quick response speed so that a safe state can be quickly established in an emergency. The motor-operated valve and the electromagnetic valve are valves that are configured to open and close with the supply of electric power. The motor-operated valve performs opening and closing operations of a valve element by rotation of an electric motor. The electromagnetic valve performs opening and closing operations of a valve element by the operation of solenoid. The electromagnetic valve is generally small in diameter, and is suitable for a fluid having medium-to-low pressure. Handling of a high-pressure fluid necessitates use of a special design, such as a pilot type using the pressure of the fluid. However, since the electromagnetic valve has a good responsiveness, the electromagnetic valve is suitable for a case where the responsiveness is important.

The motor-operated valve is slightly inferior in responsiveness to the electromagnetic valve, but has an advantage that a large valve driving force can be obtained by the electric motor and that the sealing capability at the time of closing is high. For this reason, it is suitable in a case where the pressure of the fluid is high and where it is required to maintain the pressure of the fluid by reliably sealing at the time of closing, as in the sealing system according to the present embodiment.

A valve operation system suitable for high pressure can be a valve using a fluid as a working medium, such as a pneumatic drive system. However, it takes time for the working medium to reach the valve through a supply line, and it takes time for the pressure to rise to the starting pressure that generates the driving force. In particular, the larger the volume of the working medium supply line and a cylinder, the longer it takes. In contrast, the motor-operated valve and the electromagnetic valve have very good responsiveness because their driving forces are generated instantaneously when these valves are energized to move valve elements. In addition, in the case of a valve using a fluid as a working medium, a certain flow path area is required to deliver the fluid, but the increase in flow path area increases the volume of the flow path, making it difficult to design the flow path because of a trade-off relationship between ensuring of the pressure propagation speed and the pressure rising speed. The motor-operated valve and the electromagnetic valve do not have such a problem, and only electrical wiring is the construction that is substantially required. Moreover, it is easy and inexpensive to maintain the valves.

The power source for supplying power to the shut-off valve 235 may be a power source different from the power source for the oil pump 231. Such a configuration can ensure the closing operation of the shut-off valve 235 when the oil pump 231 is stopped by a power failure.

The shut-off valve 235 is required to have a valve element which can operate quickly and has an excellent sealing capability. A ball butterfly valve may be used as the valve element that satisfies these requirements, but the valve element is not limited to this type, and any valve element may be used as long as it has a quick operation capability and an excellent sealing capability. For example, the valve element of the shut-off valve 235 may be a globe valve.

The oil pump 231 includes an electric motor 231a as its prime mover. In this embodiment, the oil pump 231 and the shut-off valve 235 are coupled to the main power source 247 and the backup power source 248. Normally, the electric power is supplied from the main power source 247 to the oil pump 231 and the shut-off valve 235. When the main power source 247 cannot supply the electric power due to a power failure or other cause, the electric power is supplied from the backup power source 248 to the oil pump 231 and the shut-off valve 235. The backup power source 248 can be constituted by a battery, a diesel engine driven generator, or the like.

Although one oil pump 231 is illustrated in FIG. 6, two or more oil pumps 231 including a regular pump and a backup pump may be provided. In this case, the electric motor of the regular pump may be supplied with the electric power from the main power source 247, and the electric motor of the backup pump may be supplied with the electric power from the backup power source 248. The prime mover of the backup pump may be a steam turbine, instead of the the electric motor.

In order to detect an emergency state where the oil pump 231 must be stopped, a pressure detector 251 is arranged between the oil pump 231 and the check valve 232. This pressure detector 251 is configured to detect the discharge pressure of the oil pump 231 and emit a signal A indicating the detected discharge pressure. The pressure detector 251 may comprise a pressure sensor, a pressure switch, a pressure transmitter, or the like. Further, the oil pump 231 is provided with a rotating speed detector 252 configured to detect the rotating speed of the oil pump 231 and to emit a signal B indicating the detected rotating speed. The rotating speed detector 252 may comprise, for example, a speedometer with a transmission function, such as a speed transmitter.

The oil pump 231 includes a pump controller 231b configured to control the operation of the oil pump 231. When an interlock related to the operation of the oil pump 231 itself is established, an interlock signal C is output from the pump controller 231b. The interlock signal C is used as a signal for detecting the above-described emergency state of the oil pump 231.

A power failure detector 257, a current measuring device 258, a voltage measuring device 259, and a power measuring device 260 are attached to a main power line 255 extending from the main power source 247 to the oil pump 231. The power failure detector 257 is configured to emit a power failure detection signal G when the power failure detector 257 detects a power failure. The current measuring device 258, the voltage measuring device 259, and the power measuring device 260 are configured to emit signals D, E, and F indicating the current, voltage, and power, respectively, supplied to the oil pump 231.

Further, a power cutout device 261 is disposed on the main power line 255. This power cutout device 261 has a function of detecting an overcurrent and cutting off the electric power. In addition, the power cutout device 261 may be configured to perform a power cut-off/power connecting operation in response to an external power cut-off/power connecting instruction. Further, the power cutoff device 261 may be configured to emit signals indicating a power cutoff state and a power connection state. In FIG. 6, the signal output from the power cutout device 261 and the signal input from the outside are collectively expressed as H.

A backup-power failure detector 272 is attached to a backup power line 271 extending from the backup power source 248 to the oil pump 231. The backup-power failure detector 272 is configured to detect a failure of the backup power source 248 and emit a signal L indicating the failure of the backup power source 248.

The pressure detector 251, the rotating speed detector 252, the power failure detector 257, the current measuring device 258, the voltage measuring device 259, the power measuring device 260, the power cutout device 261, and the backup-power failure detector 272 are operation state detectors that emit the signals A to H and the signal L indicating the operation states of the oil pump 231. The signals A to H and the signal L from these operation state detectors are sent to a system controller 265. The system controller 265 is configured to detect an emergency state of the oil pump 231 based on the signals A to H and the signal L and to transmit an instruction signal N to the shut-off valve 235. Upon receiving the instruction signal N, the shut-off valve 235 is closed.

According to this embodiment, the system controller 265 can quickly close the shut-off valve 235 when the oil pump 231 is in an emergency state.

The above-described check valve 232 located between the oil pump 231 and the seal chamber 25, at least one accumulator 234 located between the check valve 232 and the seal chamber 25, and the shut-off valve 235 attached to the oil outlet line 227 constitute a pressure retaining mechanism that retains the pressure of oil in the seal chamber 25 when the oil pump 231 is not in operation.

In one embodiment, the system controller 265 may close the shut-off valve 235 when the discharge pressure of the oil pump 231 decreases below a threshold value. For example, when the internal pressure of the main pump is 15 MPa and the oil pressure pressurized by the oil pump 231 is 16 MPa, the threshold value is set to be higher than 15 MPa and lower than 16 MPa (for example, 15.8 MPa). The discharge pressure of the oil pump 231 is detected by the pressure detector 251 located between the oil pump 231 and the check valve 232. The pressure detector 251 is configured to detect the discharge pressure of the oil pump 231, and to transmit the signal A indicating the detected discharge pressure to the system controller 265. When the discharge pressure of the oil pump 231 indicated by the signal A is lower than the threshold value, the system controller 265 closes the shut-off valve 235.

In one embodiment, the system controller 265 may close the shut-off valve 235 when the rotating speed of the oil pump 231 decreases below a threshold value. For example, when the rated rotating speed of the oil pump 231 is 1500 min⁻¹, the threshold value is set to 1470 min⁻¹, which is 2% lower than 1500 min⁻¹, because the pressure is proportional to the square of the rotating speed. The rotating speed of the oil pump 231 is detected by the rotating speed detector 252 attached to the rotational shaft of the oil pump 231. The rotating speed detector 252 is configured to detect the rotating speed of the oil pump 231 and transmit the signal B indicating the detected rotating speed to the system controller 265. When the rotating speed of the oil pump 231 indicated by the signal B is lower than the threshold value, the system controller 265 closes the shut-off valve 235.

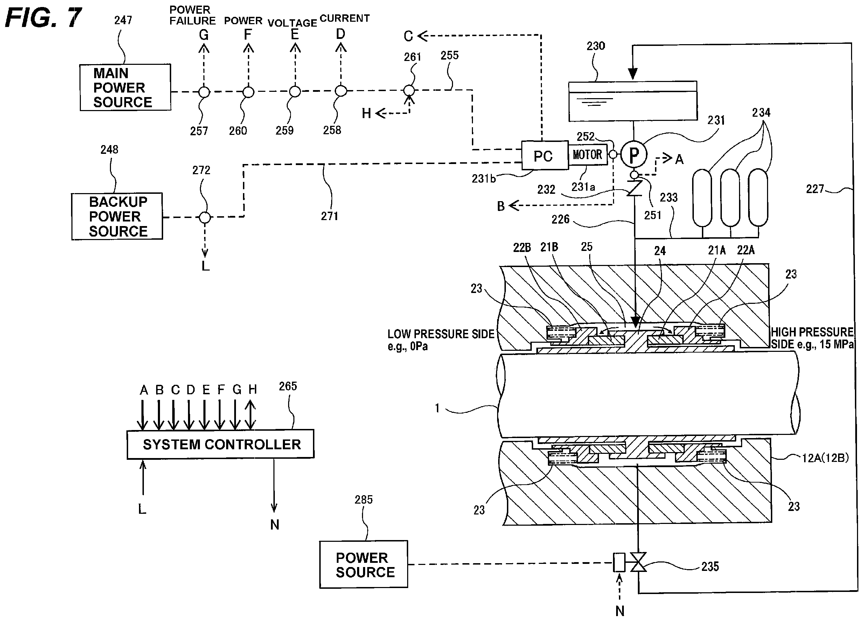

FIG. 7 is a schematic view showing another embodiment of the sealing system. The configuration and operation of the present embodiment, which will not be particularly described, are the same as those of the embodiment shown in FIG. 6, and their repetitive descriptions are omitted. In the embodiment shown in FIG. 7, a power source 80 for supplying power to the shut-off valve 235, which is a motor-operated valve or an electromagnetic valve, is provided as a power source different from the power sources 247 and 248 for the oil pump 231. This configuration can ensure the closing operation of the shut-off valve 235 when the oil pump 231 is stopped by a power failure. The power source 80 may comprise a battery or the like.

As described above, the embodiments of the present invention can be applied to a high-pressure pump for handling a supercritical fluid, such as CO₂ or H₂S. Although the embodiments of the present invention have been described above, it should be noted that the present invention is not limited to the above-described embodiments and may be implemented in various forms within the scope of the technical concept.

### Industrial Applicability

The present invention can be applied to a pump including a sealing system for preventing leakage of a fluid containing harmful a component, such as volatile flammable component or hydrogen sulfide.

### Reference Signs List

- 1: rotational shaft
- 2: casing
- 2A: inner casing
- 2B: outer casing
- 3: impeller
- 4: pin
- 5: through-bolt
- 6: suction inlet
- 7: discharge outlet
- 8A, 8B: radial bearing
- 9: thrust bearing
- 10: balance chamber
- 11: communication line
- 12A, 12B: stuffing box
- 13: casing cover
- 14: guide vane
- 15A, 15B, 15C: O-ring
- 16A, 16B, 16C: annular groove
- 17A, 17B, 17C: pressure detection port
- 20: mechanical seal
- 21A: seal ring (first rotary seal member)
- 21B: seal ring (second rotary seal member)
- 22A: seal ring body (first stationary seal member)
- 22B: seal ring body (second stationary seal member)
- 23: spring (pressing mechanism)
- 24: sleeve
- 25: seal chamber
- 26: oil supply line
- 27: oil outlet line
- 30: oil tank (oil reservoir)
- 31: first oil pump
- 32: first check valve
- 33: branch line
- 34: accumulator
- 35: shut-off valve
- 40, 40A, 40B: bypass line
- 42: second oil pump
- 44: second check valve
- 47: main power source
- 48: backup power source
- 51: pressure detector
- 52: rotating speed detector
- 55: main power line
- 57: power failure detector
- 58: current measuring device
- 59: voltage measuring device
- 60: power measuring device
- 61: power cutout device
- 65: system controller
- 70: power cutout device
- 71: backup power line
- 72: pressure detector
- 73: rotating speed detector
- 75: steam turbine
- 76: steam supply line
- 77: steam supply valve
- 80: clutch
- 91: third oil pump
- 93: third check valve
- 101: power failure detector
- 102: current measuring device
- 103: voltage measuring device
- 104: power measuring device
- 110: pressure detector
- 111: rotating speed detector

## Claims

1. A pump comprising:
a rotational shaft;
an impeller fixed to the rotational shaft;
a casing that houses the impeller therein;
a double mechanical seal;
a seal chamber that houses the double mechanical seal therein;
an oil reservoir configured to store oil;
an oil supply line providing a fluid communication between the oil reservoir and the seal chamber;
a first oil pump configured to pressurize the oil supplied from the oil reservoir and to deliver the oil to the seal chamber;
a second oil pump arranged in parallel with the first oil pump, the second oil pump being configured to pressurize the oil supplied from the oil reservoir and to deliver the oil to the seal chamber;
an oil outlet line coupled to the seal chamber; and
a pressure retaining mechanism configured to retain pressure of the oil in the seal chamber.

2. The pump according to claim 1, further comprising a system controller configured to activate the second oil pump based on a signal indicating an operation state of the first oil pump.

3. The pump according to claim 1 or 2, wherein the second oil pump includes a steam turbine as a prime mover.

4. The pump according to any one of claims 1 to 3, wherein the pressure retaining mechanism comprises:
a first check valve located between the first oil pump and the seal chamber;
a second check valve located between the second oil pump and the seal chamber;
at least one accumulator located between the first and second check valves and the seal chamber; and
a shut-off valve attached to the oil outlet line.

5. The pump according to claim 1 or 2, further comprising:
a main power source coupled to the first oil pump; and
a backup power source coupled to the second oil pump,
wherein each of the first oil pump and the second oil pump has an electric motor as a prime mover.

6. The pump according to claim 5, further comprising a third oil pump arranged in parallel with the first oil pump, the third oil pump being configured to pressurize the oil supplied from the oil reservoir and to deliver the oil to the seal chamber, the third oil pump having a steam turbine as a prime mover.

7. The pump according to claim 6, wherein the pressure retaining mechanism comprises:
a first check valve located between the first oil pump and the seal chamber;
a second check valve located between the second oil pump and the seal chamber;
a third check valve located between the third oil pump and the seal chamber;
at least one accumulator located between the first, second, and third check valves and the seal chamber; and
a shut-off valve attached to the oil outlet line.

8. A sealing system comprising:
a seal chamber for accommodating a double mechanical seal therein;
an oil reservoir configured to store oil;
an oil supply line providing a fluid communication between the oil reservoir and the seal chamber;
a first oil pump configured to pressurize the oil supplied from the oil reservoir and to deliver the oil to the seal chamber;
a second oil pump arranged in parallel with the first oil pump, the second oil pump being configured to pressurize the oil supplied from the oil reservoir and to deliver the oil to the seal chamber;
an oil outlet line coupled to the seal chamber; and
a pressure retaining mechanism configured to retain pressure of the oil in the seal chamber.
